# EUROPÄISCHE PATENTANMELDUNG

(11) **EP 4 253 104 A1**
(43) Veröffentlichungstag der Anmeldung: **04.10.2023**
(21) Anmeldenummer: 23166326.1
(22) Anmeldetag: 03.04.2023
(51) Int. Cl.: B60G 11/23, B60G 11/24, B60G 3/14, B60G 7/02, B60R 19/26

(54) **RADAUFHÄNGUNGSVORRICHTUNG**

(30) Priorität: 01.04.2022 LU 102923
(71) Anmelder: Hopper Mobility GmbH, 86154 Augsburg (DE)
(72) Erfinder: Halama, Martin, 86154 Augsburg (DE)
(74) Vertreter: Siebert-Henze, Ellen

(57) **Zusammenfassung**

Die Erfindung betrifft eine als Crashstruktur eingerichtete Radaufhängungsvorrichtung (1.0), insbesondere zur Verwendung bei zumindest dreirädrigen Vehikeln. Die Radaufhängungsvorrichtung (1.0) umfasst eine Schräglenkerachse mit Tragrohr (2.0), Innenrohr (3.0) und Dämpfungselementen (5.0) und ist derart am Vehikel angeordnet, dass die Radaufhängungsvorrichtung (1.0) zur Aufnahme erheblicher kinetischer Energien ausgelegt ist. Die Erfindung betrifft weiterhin ein Vehikel aufweisend eine erfindungsgemäße Radaufhängungsvorrichtung und einen Rahmen (8.1), welcher als Lagerungsanordnung für eine Aufbaukonstruktion ausgebildet ist.

## Beschreibung

### TECHNISCHES GEBIET

Die Erfindung betrifft eine als Crashstruktur eingerichtete Schräglenkerachse zur Verwendung in einem Fahrzeug, insbesondere bei zumindest dreirädrigen Vehikeln. Die Erfindung betrifft weiterhin ein Vehikel, aufweisend eine erfindungsgemäße Schräglenkerachse.

### STAND DER TECHNIK

Gefederte und/oder gedämpfte Einzelradaufhängungen für mehrspurige Vehikel sind vor allem als Lenkeraufhängung (z.B. Doppelquerlenker-, Mehrlenkerachsen), Federbeinaufhängung und Aufhängungen, bei denen ein Radträger direkt über einen gelagerten Lenker am Rahmen des Vehikels angebracht wird, bekannt. Aufhängungen mit mehreren Lenkern erlauben eine hohe Einstellbarkeit der Fahrwerkkinematik, benötigen allerdings großen konstruktiven Aufwand durch mehrere akkurat zu platzierende Gelenkpunkte sowie viele Komponenten.

Eine kostengünstige und platzsparende Radaufhängung ist dagegen die Längslenkerachse (z.B. in der DE000004416725B4 offenbart). Bei Längslenkerachsen lässt sich allerdings der Momentanpol des Rads beim Einfedern nicht beeinflussen. Dadurch sind fahrdynamisch vorteilhafte kinematische Effekte, wie der Aufbau von negativem Sturz oder die Einstellung eines Spurwinkels während des Einfederns, nicht gegeben.

Schräglenkerachsen (z.B. in der DE102015201338A1 offenbart) ermöglichen die Einstellung der beiden kinematischen Effekte Spur und Sturz während des Einfederns durch Einstellung eines Winkels Alpha zwischen der Schwenkachse des Schräglenkers und der Radachse. Grundsätzlich werden Schräglenker und Längslenker für gewöhnlich an zwei Gelenkpunkten gelagert, welche die Schwenkachse bestimmen. Diese Gelenkpunkte werden stark und mehrdimensional belastet und erfahren daher hohen Verschleiß.

Bekannt sind Schräglenkerachsen insbesondere mit Schraubenfedern zur Aufnahme der Hochkräfte, die von der Fahrbahn auf das Rad wirken (z.B. DE102015201338A1). Solche Konstruktionen haben einen hohen Freiraumbedarf in Hochrichtung für die Unterbringung der Schraubenfedern und deren Widerlager.

Eine Lösung für die Nachteile von Schraubenfedern bei Schräglenkerachsen ist aus der DE7319964U bekannt. Anstelle von Schraubenfedern werden hier Drehstabfederungen bzw.

Torsionsfederungen, wie aus der CH262936A bekannt, eingesetzt. Der Drehstab bzw. die Torsionsfeder kombiniert dabei die Funktion des Schräglenkers und die der Federung. Damit wird eine billige, robuste und wartungsarme Radaufhängung mit geringem Eigenraumbedarf geschaffen, die die fahrdynamischen Vorteile einer Schräglenkerachse gegenüber z.B. einer Längslenkerachse aufweist.

In der NL 7405757 A wird eine Schräglenkachse für Straßenfahrzeuge beschrieben, mit einem durchgehenden Achsrohr. In dem Achsrohr sind Halbwellen angeordnet, welche mit Gummifedern oder einer Drehstabfeder schwenkbar ausgebildet sind, und die an ihren Enden jeweils einen Lenker mit einem Achsschenkel für ein in Fahrtrichtung nach hinten weisendes Rad tragen. Das Achsrohr ist zumindest im Bereich der Halbwellen unter einem spitzen Winkel α in Fahrtrichtung nach vorne gebogen. Der Winkel beträgt dabei besonders bevorzugt 15 bis 20°. Eine derartige Schräglenkachse bewirkt eine bessere Seitenführung der Räder, außerdem werden die Antriebs- und Bremsreaktionskräfte besser auf die Fahrbahn übertragen.

In der US 5326128 A wird eine Aufhängungsbaugruppe zur Befestigung von Radbaugruppen an einem Rahmen offenbart, welche ein Paar von Torsionsfeder-Unterbaugruppen umfasst, die durch ein zentrales Achsrohr einstellbar miteinander verbunden sind, um eine einheitliche achsähnliche Baugruppe zu bilden, deren Torsionsfeder-Unterbaugruppen einstellbar in verschiedenen gewünschten, beabstandeten Positionen zur Verbindung mit einem ausgewählten Rahmen mit einer bestimmten Breite befestigt werden können. Jede Torsionsfederunterbaugruppe enthält einen Drehmomentbegrenzer und umfasst ferner ein Außenrohr mit einem klammerartigen Montageelement zur Verbindung des Außenrohrs mit den Seitenträgern des Rahmens, wobei das Klammerelement im Allgemeinen eine ebene Form hat und so beschaffen ist, dass es Kräfte von den Rädern direkt über die Torsionsfederunterbaugruppen auf den Rahmen in einer Weise überträgt, die die Verformung minimiert, wenn der Drehmomentbegrenzer eingreift.

Anstelle zweier hochbelasteter Gelenkpunkte erlaubt die Kombination von Schräglenkerachse und Drehstabfederung bzw. Torsionsfederelement die Lagerung des Federelements, welches hier gleichzeitig den Schräglenker darstellt, entlang bis zu dessen ganzer Länge.

Beispielsweise aus der US000010913416B2 bekannt sind Crashstrukturen für Vehikel, insbesondere für den Frontalaufprall. Dazu werden speziell angepasste Konstruktionen und Materialien genutzt (z.B. EP1316409A1). Crashstrukturen dienen dem kontrollierten Abbau kinetischer Energie und der Entschleunigung des Fahrzeugs und damit der Insassen. Dazu sind Strukturen wie in den o.g. Patenten vorgesehen, die sich kontrolliert über einen möglichst langen Weg plastisch verformen. Für gewöhnlich ist dabei eine zusätzliche, deformierbare Crashstruktur notwendig, da der Rahmen selbst sehr steif ist und bei einem Frontalaufprall zu einer zu starken Entschleunigung führen würde. Diese Crashstruktur muss als zusätzliche Komponente angefertigt und platzaufwendig an die Vorderseite des Rahmens angebracht werden (vgl. US020150165994A1), oder als integrierter, zusätzlicher Teil des Rahmens ausgelegt und gefertigt werden (vgl. EP1316409A1). Beide Varianten erfordern einen erhöhten Konstruktions- und Fertigungsaufwand.

### AUFGABE

Die vorliegende Erfindung hat es sich zur Aufgabe gemacht, eine Crashstruktur gegen Fahrunfälle bereitzustellen, die besonders kostengünstig, platzsparend und konstruktiv einfach aufgebaut ist und bei zumindest dreirädrigen Vehikeln verwendet werden kann.

### LÖSUNG

Die Aufgabe wird mit einer Radaufhängungsvorrichtung mit den Merkmalen des Anspruchs 1, sowie ein Vehikel mit den Merkmalen des nebengeordneten Anspruchs gelöst. Weitere vorteilhafte Ausgestaltungen sind den Unteransprüchen, der Beschreibung und den Ausführungsbeispielen zu entnehmen.

### ALLGEMEINE VORTEILE

Neben dem erfindungsgemäßen Vorteil der Integration von Radlagerung, Federung und Dämpfung sowie Crashstruktur in einer einfach strukturierten Radaufhängungsvorrichtung, umfasst die vorliegende Erfindung die folgenden Vorteile. So ist diese insbesondere für leichte, zumindest dreirädrige, Vehikel wie Dreiräder geeignet. Bei solchen Vehikeln müssen die Crashstrukturen aufgrund begrenzter Höchstgeschwindigkeit und Fahrzeuggewicht weniger umfangreich ausgebildet sein, als es bei Automobilen der Fall ist, sodass eine solche integrierte Crashstruktur ausreichend ist. Gleichzeitig wird die Sicherheit der Insassen erhöht im Vergleich zu dem Fall, dass keine Crashstruktur verwendet wird. Durch die geringe Anzahl an Komponenten werden die Kosten und das Gesamtgewicht des Vehikels reduziert. Insbesondere bei schmalen Fahrzeugen kann durch den geringen Freiraumbedarf und die spezifische Anordnung der Komponenten der Radaufhängungsvorrichtung der zur Verfügung stehende Raum zwischen den Rädern vergrößert werden. Dies erhöht bei der Verwendung der Radaufhängungsvorrichtung als Vorderradaufhängung die Beinfreiheit und bei der Verwendung als Hinterradaufhängung den Stauraum. Gegenüber der noch simpleren Lösung einer Längslenkerachse bietet diese Erfindung eine Einstellbarkeit des Momentanpols des Rades und dadurch fahrdynamische Vorteile. Die Schräglenkerachse mit Torsionsfederelement bietet, wie in den Unteransprüchen ausgeführt, Vorteile bezüglich der Flexibilität der Achskonstruktion. Dämpferelemente können ausgetauscht sowie die Spur des Fahrzeugs eingestellt werden, womit die Fahreigenschaften des Vehikels veränderbar sind.

### BESCHREIBUNG DER ERFINDUNG

Die vorliegende Erfindung betrifft eine Radaufhängungsvorrichtung (1.0) für zumindest dreirädrige Vehikel (8.0), wobei die Vorrichtung eine Schräglenkerachse (1.1) umfasst. Die Schräglenkerachse ist als Einzelradaufhängung ausgeführt, wobei die Schräglenkerachse zumindest ein Torsionsfederelement (1.2) umfasst, wobei ein Torsionsfederelement jeweils ein Rad (4.0) federt. Ein Torsionsfederelement umfasst dabei zumindest ein Tragrohr (2.0), ein innerhalb des Tragrohres angeordnetes Innenrohr (3.0), sowie zumindest ein Dämpfungselement (5.0), welches zwischen Tragrohr und Innenrohr angeordnet ist. Ein distales Radschwinghebelende (6.2) ist mit einem Radführungsmittel (4.1) verbunden. Das Radführungsmittel ist mit dem Rad verbindbar. Zwischen einer Radachse (4.2) und dem Tragrohr ist ein Winkel Alpha (a, 4.3) eingestellt.

Eine **Vehikellängsachse** (10.0) ist in Fahrtrichtung und im Wesentlichen parallel zu einer **Fahrbahn** unter Annahme einer ebenen Fahrbahn gerichtet. Eine **Vehikelquerachse** (10.1) ist senkrecht zur Vehikellängsachse und im Wesentlichen parallel zur Fahrbahn unter Annahme einer ebenen Fahrbahn ausgerichtet. Eine **Vehikelhochachse** (10.2) ist senkrecht zu beiden vorgenannten Achsen gerichtet.

Eine **Fahrtrichtung** bezeichnet hierbei eine Hauptfahrtrichtung des Vehikels entlang der Vehikellängsachse, wobei insbesondere die Ausrichtung des Fahrersitzes die Fahrtrichtung aufzeigt. Es ist klar, dass eine Fahrtrichtung auch entgegen der Hauptfahrtrichtung gerichtet sein kann, was hierin als Rückfahrtrichtung bezeichnet ist.

Die Vehikellängsachse, die Vehikelquerachse und die Vehikelhochachse kreuzen sich im Schwerpunkt des Vehikels. Die Vehikellängsachse und die Vehikelquerachse liegen in der Vehikelhorizontalebene (10.3). Die Vehikellängsachse und die Vehikelhochachse liegen in der Vehikellängsmittelebene (10.4). Die Vehikelquerachse und die Vehikelhochachse liegen in der Vehikelquermittelebene (10.5). Alle Achsen und Ebenen sind in ihrer Ausdehnung so dimensioniert, dass sie die maximalen Abmessungen des Vehikels bündig einschließen.

Unter der Ausführungsart **Einzelradaufhängung** der Schräglenkerachse wird hierin eine Achsenart verstanden, bei der die Räder der Schräglenkerachse unabhängig voneinander eine Federbewegung ausführen können. Die Ausführungsart "Einzelradaufhängung" wird dadurch erreicht, dass jedes Rad und das zugehörige Radführungsmittel und der zugehörige Radschwinghebel, zusammen im Folgenden **Radbaugruppe** genannt, über ein Torsionsfederelement gelagert und gefedert sind. Die Federbewegung der Radbaugruppe über das zugehörige Torsionsfederelement beeinflusst dabei nicht die Federbewegung einer anderen, bevorzugt gegenüberliegenden, Radbaugruppe oder deren zugehörigen Torsionsfederelements.

Für gewöhnlich umfasst eine Schräglenkerachse jeweils eine Einzelradaufhängung zweier Räder, zwei Radbaugruppen und zwei Torsionsfederelemente.

Unter einem **dreirädrigen Vehikel** (8.0) (auch: Vehikel, Fahrzeug) wird ein Gefährt zum Transport von Personen und/oder Lasten verstanden, welches drei Räder an zumindest zwei Achsen besitzt, wobei jedem Rad nur eine Achse zugeteilt sein kann, oder wobei sich gegenüberliegende Räder eine Achse teilen können. Beim Einsatz der hier beschriebenen Radaufhängungsvorrichtung in einem dreirädrigen Vehikel wird die Radaufhängungsvorrichtung als zweirädrige Achse eingesetzt. Ein zumindest dreirädriges Vehikel, welches eine erfindungsgemäße Vorrichtung umfasst unterscheidet sich von einem **konventionellem Vehikel** in der Art, als dass letzteres zumindest keine als Crashstruktur - die weiter unten beschrieben ist- ausgelegte Schräglenkerachse umfasst.

Die Radaufhängungsvorrichtung kann grundsätzlich an jedem Punkt entlang der Vehikellängsachse angeordnet sein. Die erfindungsgemäße Schräglenkerachse ist bevorzugt als **Vorderachse** ausgeführt, das bedeutet, dass sie sich in Fahrtrichtung vor allen anderen Achsen des Vehikels angeordnet ist.

Für gewöhnlich umfasst die Radaufhängungsvorrichtung eine **ungelenkte Schräglenkerachse.** Eine ungelenkte Schräglenkerachse bedeutet, dass die Rotation jedes Rads der Schräglenkerachse um eine Lenkachse dieses Rads konstruktiv nicht erlaubt ist. Die Rotation um eine Lenkachse erfolgt dabei primär als eine Rotation um die Vehikelhochachse. Ein Rad einer ungelenkten Schräglenkerachse rotiert im Wesentlichen nur um seine Radachse beim Rollen des Rads. Die **Radachse** des Rades ist dabei im Wesentlichen parallel zur Vehikelquerachse. Im Wesentlichen bedeutet, dass die Radachse um geringe Winkel von in der Regel unter 1 Grad von der Vehikelquerachse abweichen kann. Darüber hinaus erfolgt als Nebeneffekt durch die Einfederbewegung des Rades eine weitere geringfügige Abweichung der Parallelität von Radachse und Vehikelquerachse.

Bevorzugt wird die hierin beschriebene Radaufhängungsvorrichtung in einem dreirädrigen Vehikel als zweirädrige, ungelenkte Vorderachse eingesetzt, während das Vehikel außerdem eine einrädrige, gelenkte Hinterachse aufweist.

Unter einer **proximalen** Position wird hierin ein Teil oder Abschnitt einer Komponente oder eines Mittels verstanden, welcher im Wesentlichen näher an einem Bezugspunkt, insbesondere zur Vehikellängsmittelebene, befindlich ist als eine **distale** Position, die weiter entfernt davon befindlich ist. Die Bezeichnung "proximal" beschreibt dabei nicht immer den kürzesten direkten Weg zur Vehikellängsmittelebene, sondern die Nähe in Bezug auf die Konstruktion der Schräglenkerachse. Beispielsweise ist ein **proximales Radschwinghebelende** (6.1), wie weiter unten beschrieben, das mit dem Torsionsfederelement verbundene Ende des Radschwinghebels. Obwohl der Radschwinghebel im Wesentlichen parallel zur Vehikellängsmittelachse orientiert ist, ist hier das proximale Ende durch die Anbindung an die nächste, proximalere Komponente der Schräglenkerachse definiert, unabhängig vom genauen Abstand zur Vehikellängsachsenmitte. Hierin wird der Bereich des Innenrohrs, der mit dem proximalen Radschwinghebelende verbunden ist, als **distales Innenrohrende** (3.2) bezeichnet.

Von der Vehikellängsmittelebene ausgehend umfasst die Schräglenkerachse eine Anordnung von zumindest einem Torsionsfederelement, Radschwinghebel, Radführungsmittel und Rad.

Unter einem **Rahmen** (8.1) (auch: Fahrzeuggestell, Chassis, Untergestell) wird eine Konstruktion verstanden, welche die tragenden Teile von Fahrzeugen bezeichnet. Tragende Teile haben die Funktion, den Antrieb, die Karosserie (auch: Aufbaukonstruktion) und die Nutzlast zu tragen und gegen äußere Krafteinwirkungen zu stabilisieren. Insbesondere dient der Rahmen als **Lagerungsanordnung** für eine **Aufbaukonstruktion.** Unter einer solchen wird bspw. eine **Fahrgastzelle** verstanden. Statt einer Fahrgastzelle zu umfassen kann die Aufbaukonstruktion derart ausgestaltet sein, dass sie nur Lasten transportiert.

Die Radaufhängungsvorrichtung dient der Lagerung der Räder in der bestimmungsgemäßen Position sowie der Übertragung von **Fahrwerkskräften** von der Fahrbahn in einen Rahmen des Vehikels. Alle Komponenten der Radaufhängungsvorrichtung müssen den auf sie wirkenden Fahrwerkskräften ohne Schäden in Form von irreversibler Verformung standhalten.

Komponenten, die keine Feder- und Dämpfungsfunktionalität haben, sollen sich dabei möglichst wenig verformen, damit die gewünschte Fahrdynamik durch die definierte Position der Räder erhalten bleibt. Zu den Fahrwerkskräften zählen die Gewichtskraft des Vehikels durch dessen Masse, Beschleunigungskräfte bei Beschleunigung, Bremsung oder Kurvenfahrt des Vehikels, aber auch Stoßkräfte, z.B. durch Fahrbahnunebenheiten. Stoßkräfte sind so lange typische Fahrwerkskräfte, denen die Fahrwerkskomponenten standhalten müssen, wie diese Kräfte in seltenen bis weniger seltenen alltäglichen Situationen auftreten. Beispielsweise gehören die Belastungen durch eine anspruchsvolle Geländefahrt in der Regel zu den Fahrwerkskräften.

Kräfte, die nicht unter die typischen Fahrwerkskräfte zählen und auf die das Fahrwerk nicht ohne Schaden ausgelegt ist, sind Kräfte beim **Fahrunfall.** Beim Fahrunfall wird die Bewegungsenergie eines Fahrzeuges auf kürzester Strecke abgebaut, sodass extreme Kräfte mit **erheblichen kinetischen Energien** entstehen. Der Fahrunfall ist daher ein Sondereffekt, der beachtet werden muss. Die entstehenden Kräfte müssen durch stabile, verformbare **Crashstrukturen** abgefangen werden. Crashstrukturen müssen stabil genug sein, damit die gesamte Bewegungsenergie des Vehikels durch Verformung der Crashstruktur abgebaut werden kann. Crashstrukturen müssen zudem verformbar sein, weil die Bewegungsenergie über eine möglich lange Strecke, auch **Knautschzone** genannt, abgebaut werden muss, damit die Sicherheit der Insassen des Vehikels gewährleistet ist.

Die erfindungsgemäße Vorrichtung ist derart ausgestaltet, dass die Schräglenkerachse als eine solche Crashstruktur ausgestaltet ist. Dies wird über die besondere Ausgestaltung der Schräglenkerachse erreicht. Der Winkel Alpha (α) bezieht sich im Wesentlichen auf den Winkel zwischen der Längsachse des Innenrohrs und der Vehikellängsmittelebene oder zur Radachse. Das Torsionsfederelement ist unter dem Winkel Alpha zur Radachse, für gewöhnlich in der Vehikelhorizontalebene, angeordnet.

Der Winkel Alpha ist ein **spitzer Winkel,** wobei das Torsionsfederelement ausgehend von der Vehikellängsmittelebene in Richtung der Fahrtrichtung des Vehikels nach der Art von Schräglenkerachsen abgewinkelt ist. Diese schräge Anordnung unter dem Winkel Alpha ist erfindungswesentlich, das sie konstruktiv ermöglicht, dass das Torsionsfederelement im Falle eines Unfalls in der Funktion einer Crashstruktur Energie aufnimmt.

Konstruktiv ermöglicht der Winkel Alpha zumindest einen **vordersten Punkt der Radaufhängungsvorrichtung** (9.0) (möglich sind Tragrohr, Innenrohr, Radbaugruppe) in Fahrtrichtung vor einem **vordersten Punkt des Rahmens** (9.1) anzuordnen. Der Abstand zwischen beiden Punkten bildet die Knautschzone. Insbesondere das schräg unter dem Winkel Alpha angeordnete Torsionsfederelement oder die Radbaugruppe werden bei einem Fahrunfall mit frontalem Aufprall zeitlich vor dem Rahmen durch das aufprallende Hindernis getroffen. Das Torsionsfederelement wird in diesem Fall auf Biegung belastet und kann so über einen langen Weg deformiert werden, anstatt die Kräfte punktlastig in den Rahmen zu übertragen. Die erfindungsgemäße Vorrichtung ist für eine erhebliche kinetische Energieaufnahme, insbesondere bei einem Fahrunfall in der Hauptfahrrichtung / frontalem Aufprall, eingerichtet, wodurch vorteilhaft die Sicherheit der Vehikelinsassen insbesondere gegenüber konventionellen Vehikeln erhöht ist. Es kann dabei auch ein Element des Fahrzeugs in Fahrtrichtung vor dem vordersten Punkt der Radaufhängungsvorrichtung angeordnet sein, wobei es sich bei einem solchen Element dann nicht um Teile des Rahmens, insbesondere nicht um tragende Teile handelt.

Im Vergleich mit dem Einsatz einer Querlenkerachse, welche nicht als Crashstruktur genutzt werden kann, ergibt sich vorteilhaft ein erhöhter Schutz der Insassen beim Fahrunfall durch die kontrollierte Entschleunigung des Vehikels beim Aufprall. Im Vergleich mit dem Einsatz einer zusätzlichen, eigenständigen Crashstruktur als Anbau an den Rahmen in Fahrtrichtung vorwärts, ergibt sich ein Kostenvorteil durch Ersparung von Konstruktion und Materialkosten.

Der Fachmann wird das Material der Schräglenkerachse so auswählen, dass diese eine für die Verwendung als Crashstruktur erforderlichen Festigkeit und Steifigkeit, insbesondere bei einem Frontalaufprall, aufweist.

Weiterhin setzt der Einsatz als Crashstruktur voraus, dass die Schräglenkerachse in Aufprallrichtung deformiert werden kann, bevorzugt ohne, dass das Fahrzeug mit dem schwerer deformierbaren Rahmen auf das Hindernis trifft. Dies ist vom Fachmann bei der Konstruktion zu beachten. Die Schräglenkerachse kann auch als zusätzliche Crashstruktur zu einer anderen Crashstruktur zur Erhöhung der Sicherheit dienen.

Bevorzugt ist der Winkel Alpha weder nahe null Grad noch nahe 90 Grad, wobei ein Winkel von 0° eine Parallelität des Innenrohrs mit der Vehikequermittelebene und ein Winkel von 90° eine Parallelität des Innenrohrs mit der Vehikellängsmittelebene bedeuten würde.

Ein Winkel Alpha nahe null Grad, insbesondere unter 5°, vorzugsweise unter 3°, würde demnach bewirken, dass die Schräglenkerachse, insbesondere bei einem Frontalaufprall, konstruktiv schwieriger als Crashstruktur genutzt werden kann, da bei einem Fahrunfall mit frontalem Aufprall weniger verformbarer Weg des Torsionsfederelements zur Verfügung steht. Weiterhin wird in diesem Fall der fahrdynamische Vorteil des negativen Sturzes beim Einfedern geringer. Bei einem Winkel Alpha nahe 90 Grad wird der Effekt des Einsatzes der Schräglenkerachse als Crashstruktur ebenfalls geringer, da Kräfte bei einem Frontalaufprall ohne starke Verbiegung der Achse in den Rahmen des Vehikels eingeleitet werden würden.

Ein Winkel Alpha wird demnach bevorzugt zwischen 1° und 30°, besonders bevorzugt zwischen 2° und 20, vorzugsweise zwischen 2° und 10° und ganz besonders bevorzugt zwischen 5° und 9° gewählt. Weiter bevorzugt beträgt der Winkel Alpha 8° plus/minus 2°. Ein Winkel von mehr als 5° ermöglicht eine Kraftaufnahme einerseits aus der Hauptfahrrichtung, sowie aus einer seitlichen Richtung, die senkrecht zur Hauptfahrtrichtung orientiert ist, so dass auch bei einem Fahrunfall mit Aufprall aus seitlicher Richtung eine ausreichend hohe kinetische Kraftaufnahme durch die Radaufhängungsvorrichtung erreicht wird.

Üblicherweise wird zur Federung von Schräglenkerachsen der Winkel α zwischen 10° und 30° gewählt, wie beispielsweise in der NL7405757A gelehrt wird. Durch eine derartige Konstruktion kann eine bessere Seitenführung der Räder, sowie eine verbesserte Übertragung der Antriebs- und Bremsreaktionskräfte auf die Fahrbahn bewirkt werden. Den Winkel α dabei kleiner auszubilden ist generell nicht üblich und führt eher von einem Einsatz derartiger Schräglenkerachsen als Crashstruktur weg. Es hat sich dennoch überraschenderweise gezeigt, dass sich ein Winkel α auch im Bereich von 1° bis 10°, bevorzugt im Bereich von 5° bis 9° als vorteilhaft für die Verwendung als Crashstruktur herausgestellt hat, da eine entsprechend ausgebildete Schräglenkerachse die während eines Fahrunfalles auftretenden kinetischen Energien effizient aufnehmen kann und gleichzeitig dennoch eine zuverlässige Federung während des normalen Fahrbetriebs gewährleistet.Die Verwendung der Radaufhängungsvorrichtung zum Einsatz als Crashstruktur, bei einem zumindest dreirädrigem Vehikel, ermöglicht zudem, dass eine weiter unten beschriebene Aufbaukonstruktion im Leichtbauweise gefertigt werden kann und dennoch eine ausreichend stabile Crashstruktur vorhanden ist, um die Sicherheit der Vehikelinsassen zu erhöhen.

Wie bei den aus dem Stand der Technik bekannten Schräglenkerachsen umfasst die Radaufhängungsvorrichtung zumindest ein Torsionsfederelement, welches aus den Komponenten Tragrohr, Innenrohr sowie zumindest einem Dämpfungselement zusammengesetzt.

Das Torsionsfederelement erfüllt die Aufgabe der Federung und Dämpfung der von der Radbaugruppe in den Rahmen des Vehikels übertragenen Kräfte. Durch den Winkel Alpha wird wie oben beschrieben der Momentanpol des Rades bei einer Federbewegung eingestellt, sodass einerseits das Eigenlenk- und Fahrverhalten des Vehikels beeinflusst werden kann und gleichzeitig das Torsionsfederelement als Crashstruktur dient. In einer speziellen Ausführung des Torsionsfederelementes ist dieses nicht nur unter dem Winkel Alpha zur Radachse parallel zur Vehikelhorizontalebene, sondern zusätzlich unter einem Winkel Beta (β) zur Vehikelhorizontalebene angewinkelt. Durch diese Ausführung wird die Einstellbarkeit des Momentanpols des Rades und damit des Fahrverhaltens erhöht.

Das **Tragrohr** ist bevorzugt mit dem Rahmen des Vehikels verbunden. Diese Verbindung gibt den Winkel Alpha vor. Das Tragrohr ist in seiner Länge so bemessen, dass es in Kombination mit dem im Tragrohr gelagerten Innenrohr und der mit diesem verbundenen Radbaugruppe die gewünschte Spurweite des Vehikels vorgibt. Hierin soll der Begriff "Tragrohr" und "äußeres Tragrohr", "linkes Tragrohr", "rechtes Tragrohr" äquivalent verwendet werden.

Das Tragrohr weist einen zumindest dreieckigen Querschnitt auf. Vorzugsweise ist der Querschnitt mehreckig. Mit einer größeren Anzahl an Querschnittsecken erhöht sich die Steifigkeit und Festigkeit des Tragrohrs gegenüber Fahrwerkskräften. Gleichzeitig soll gewährleistet sein, dass Dämpfungselemente zwischen den Profilen von Innenrohr und Tragrohr formschlüssig gelagert werden können, sodass auf zu viele Querschnittsecken oder ein rundes Profil beider Rohre nachteilig wirken kann.

Vorzugsweise hat das Tragrohr abgerundete Innen- und Außenkanten, um mechanische Spannungsspitzen durch die komplexe Belastung in spitzen Kanten zu vermeiden. Die Wandstärke eines Tragrohres ist zumindest so stark ausgelegt, dass sie den Anforderungen der Fahrwerkskräfte und des Fahrunfalles gerecht wird. Der Fachmann weiß, wie Wandstärken ausgelegt sein müssen, um den bestimmungsgemäßen mechanischen Anforderungen zu genügen.

Der Hohlraum innerhalb des Tragrohres weist im Querschnitt eine Fläche auf, die zumindest so groß ist, dass das Dämpfungselement und das Innenrohr nach deren notwendigen Anforderungen an Feder- und Dämpfungsverhalten sowie Kraftaufnahme und Steifigkeit dimensioniert werden können. Die Auslegung von Wandstärke und Hohlraum innerhalb des Tragrohrs können dabei vom Fachmann entsprechend den fahrdynamischen Anforderungen ausgewählt werden.

Das Tragrohr ist bevorzugt aus einem Material mit hoher Steifigkeit und Festigkeit, beispielsweise Metall (z.B. Stahl, Aluminium) oder Faserverbundstoff, ausgestaltet. Vorzugsweise wird als ein solches Material Stahl verwendet. Stahl weist eine hohe Steifigkeit durch ein Elastizitätsmodul von 210.000.000.000 N/m² und je nach Zusammensetzung eine hohe Festigkeit auf. Stahl ist einfach zu verarbeiten, z.B. durch Schweißen und Wärmebehandlung. Weiterhin ist Stahl je nach Zusammensetzung, günstiger als andere Metallwerkstoffe wie Aluminium, und zeichnet sich durch ein kontrollierbares Versagensverhalten im Falle eines Fahrunfalls aus. Bevorzugt werden Stahlsorten mit erhöhtem Kohlenstoffanteil für das Tragrohr verwendet, da diese vorteilhaft eine hohe Festigkeit aufweisen.

Bevorzugt wird eine Legierung verwendet, welche schweißbar ist, um einfache Befestigungsoptionen am Rahmen zu ermöglichen. Für Anwendungen des Vehikels mit hohen Anforderungen an Korrosionsbeständigkeit, beispielsweise die dauerhafte Verwendung unter freiem Himmel, wird bevorzugt eine Legierung verwendet, welche zumindest eine erhöhte Korrosionsbeständigkeit gegen Rost aufweist. Hierfür können insbesondere Chromstähle zum Einsatz kommen. Alternativ zu Stahlwerkstoffen kann Aluminium als Material für das Tragrohr verwendet werden. Aluminium ist grundsätzlich korrosionsbeständig und in vielen Legierungen ebenfalls schweißbar. Aluminium weist nur etwa ein Drittel der Dichte von Stahl auf, wodurch Vorteile beim Leichtbau des Vehikels erreicht werden können. Gleichzeitig ist Aluminium deutlich weniger steif und fest als Stahl. Durch Vergrößerung des Querschnitts des Tragrohrs kann dieser Nachteil ausgeglichen werden. Der Fachmann kann über diesen Zielkonflikt auf Basis der Anforderungen an die Fahrwerkskräfte und das Gesamtgewicht des Vehikels (auch: Vehikelgesamtgewicht) entscheiden.

Zumindest ein **Dämpfungselement** ist mit dem Innenrohr verbunden. Bevorzugt umfasst das Torsionsfederelement zumindest zwei, weiter bevorzugt zumindest drei oder mehr Dämpfungselemente, welche um den Querschnitt des Innenrohres verteilt verwendet. Die Dämpfungselemente lagern das Innenrohr formschlüssig bezüglich aller Rotationsrichtungen und radialer Translationsbewegungen in Bezug zur Längsachse des Tragrohrs.

Durch ihre elastische Verformbarkeit gewährleisten die Dämpfungselemente die kontrollierte Bewegung des Innenrohres, insbesondere die Torsionsbewegung um die Längsachse des Innenrohres. Die Dämpfungselemente bewirken durch ihre Verformbarkeit sowohl eine Federungswirkung als auch eine Dämpfungswirkung. Die Federungs- und Dämpfungswirkung wird jeweils durch die Form und Größe der Dämpfungselemente in alle drei Raumrichtungen sowie durch die Größen "Elastizitätsmodul" und "Dämpfungsgrad" bestimmt, welche spezifische Materialeigenschaften der Dämpfungselemente sind.

Für die Dämpfungselemente wird dabei bevorzugt ein flexibles Material verwendet, welches eine signifikante Dämpfungswirkung aufweist. Ein flexibles Material weist die Eigenschaft auf, dass das Elastizitätsmodul nicht zu groß ist. Beispielsweise wird ein Elastizitätsmodul von Stahl von 210.000.000.000 N/m² viel zu hoch für die gewünschte Federungswirkung sein. Die gewünschte Federungs- und Dämpfungswirkung des Dämpfungselements muss von einem Fachmann in Abhängigkeit der Art und Verwendung des Vehikels bestimmt werden. Daraus kann der Fachmann Form, Größe, Anzahl und Materialeigenschaften der Dämpfungselemente bestimmen.

Bevorzugt ist ein Dämpfungselement aus einem Kunststoff, bevorzugt einem Elastomer (z.B. vulkanisierter Kautschuk, Polyurethan) oder aus einem Duroplast (z.B. Ebonit, Phenolharze) ausgeführt. Alternativ können andere Materialien verwendet werden, welche die Anforderungen an das Elastizitätsmodul und den gefordertem Dämpfungsgrad erfüllen, bei vielfacher Belastung dauerfest sowie korrosionsfest sind. Die Dämpfungselemente können vom Fachmann zumindest so dimensioniert werden, dass sie sich mit ihren spezifischen Materialeigenschaften nicht so weit verformen können, dass das Innenrohr die Innenwandung des Tragrohrs kontaktiert. Dies gilt für alle zu erwartenden Fahrwerkskräfte, abgesehen von den auftretenden kinetischen Energien während eines Fahrunfalles.

Das **Innenrohr** ist durch zumindest ein Dämpfungselement im Tragrohr gelagert. Es ist in seiner Länge zumindest so bemessen, dass es stabil im Tragrohr gelagert werden kann. Stabil bedeutet, dass die Dämpfungselemente die Fahrwerkskräfte, die über das Innenrohr übertragen werden, ohne Kontaktierung von Innenrohr und Tragrohr aufnehmen. Bevorzugt erstreckt sich der Abschnitt des Innenrohrs, der im Tragrohr gelagert ist, auf nahezu die gesamte Länge des Tragrohrinneren. Die Lagerung über einen langen Innenrohrabschnitt erhöht vorteilhaft die Dämpfungswirkung des Torsionsfederelements.

Rotationen um eine **Innenrohrlängsachse** (3.1) erlauben Federbewegungen des Rades und sind somit erwünscht, alle anderen Rotationen sind fahrdynamisch nicht erwünscht. Das Innenrohr weist einen mindestens dreieckigen Querschnitt auf. Vorzugsweise ist der Querschnitt mehreckig, denn mit mehr Querschnittsecken erhöht sich die Steifigkeit und Festigkeit des Innenrohrs gegenüber Fahrwerkskräften. Gleichzeitig soll gewährleistet sein, dass Dämpfungselemente zwischen den Profilen von Innenrohr und Tragrohr formschlüssig gelagert werden können, sodass zu viele Ecken beziehungsweise ein rundes Profil beider Rohre nachteilig wirken kann. Vorzugsweise hat das Torsionsinnenrohr abgerundete Innen- und Außenkanten, um mechanische Spannungsspitzen durch die komplexe Belastung in spitzen Kanten des Innenrohrs zu vermeiden. Die Wandstärke ist zumindest so stark ausgelegt, dass sie den Anforderungen aufgrund der Fahrwerkskräfte und des Fahrunfalles gerecht wird. Das Innenrohr ist bevorzugt aus einem Material mit hoher Steifigkeit und Festigkeit ausgestaltet. Das Innenrohr kann aus dem gleichen Material gebildet sein, wie weiter oben für das Tragrohr beschrieben.

Für gewöhnlich ist das distale Innenrohrende mit dem proximalen Radschwinghebelende verbunden. In einer bevorzugten Ausführungsform ist das distale Innenrohrende mit dem proximalen Radschwinghebelende **entkoppelbar verbunden.** In der entkoppelbaren und der nicht entkoppelbaren Ausführungsform kann diese Verbindung in Form einer fest eingespannten Lagerung ausgestaltet sein, welche Kräfte und Momente in alle Richtungen aufnehmen kann. Dadurch wird jegliche Bewegung der Radbaugruppe ohne Freiheitsgrade an das Innenrohr übertragen. Dadurch wird gewährleistet, dass der Radschwinghebel nur die durch das Torsionsfederelement gewünschte und vorgegebene Federbewegung ausführt.

Eine reversible, entkoppelbare Verbindung in Form einer möglichen Entkopplung von Innenrohr und Radschwinghebel kann durch ein **Entkoppelungsmittel** (6.3) erreicht werden. Unter einem solchen wird ein Mittel verstanden, welches ermöglicht, dass das Innenrohr vom Radschwinghebel, vorzugsweise beim Stillstand des Vehikels, entkoppelt werden kann. Dabei ist das Entkoppelungsmittel bevorzugt am distalen Innenrohrende und am proximalen Radschwinghebelende angeordnet. Die genaue Ausgestaltung des Entkoppelungsmittels ist dabei nicht relevant und kann vom Fachmann bestimmt werden. Vorteilhaft kann mit einer entkoppelbaren Verbindung erreicht werden, dass das Innenrohr einfach zugänglich ist und aus dem Tragrohr einfach entnommen werden kann, bspw. um das Innenrohr auszutauschen.

In einer Ausführungsform ist die entkoppelbare Verbindung derart gestaltet, dass kein Werkzeug notwendig ist, um das distale Innenrohrende vom proximalen Radschwinghebelende zu trennen, wodurch eine **einfache Entnahme** des Innenrohrs gewährleistet ist. Somit kann vorteilhaft erreicht werden, dass das Vehikel zum Austausch des Innenrohres nur mit einem Hebemittel angehoben werden muss und dann die Radbaugruppe als Ganzes entfernt werden kann. Somit sind weniger Schritte notwendig, da nicht erst das Rad, und dann der Radschwinghebel abmontiert werden müssen.

Ein **Austausch** des Innenrohrs kann bspw. dann erforderlich sein, wenn die Federwirkung des Vehikels angepasst werden soll. So kann dies der Fall sein, wenn die Federwirkung auf ein möglicherweise verändertes Gesamtgewicht des Vehikels angepasst werden soll, oder wenn der fahrdynamische Komfort, beispielsweise das Verhalten des Vehikels auf unebener Fahrbahn, angepasst werden soll. Dadurch kann das Vehikel vorteilhaft je nach Bedarf in sehr unterschiedlichen Einsatzszenarien eingesetzt werden.

Hierfür ist es angedacht, dass Innenrohr und daran angeordnete Dämpfungselemente (hierin soll Dämpfungselement und der Plural Dämpfungselemente äquivalent verwendet werde) so auszugestalten, dass diese zusammen aus dem Tragrohr entnommen werden können. Dafür sind die Dämpfungselemente mit dem Innenrohr entweder **formschlüssig** und/oder **stoffschlüssig verbunden,** wobei die Dämpfungselemente entlang / parallel der Innenrohrlängsachse angeordnet sind. Dabei können mehr als ein Dämpfungselement entlang der Innenrohrlängsachse angeordnet sein. So kann sich die Länge eines Dämpfungselements im Wesentlichen über die Länge der Innenrohrlängsachse erstrecken, oder wesentlich kürzer als die Länge der Innenrohrlängsachse sein.

Bevorzugt wird eine stoffschlüssige Verbindung gewählt, wobei die Art des Haftmittels, welche die stoffschlüssige Verbindung des Dämpfungselements mit dem Innenrohr etabliert, vom Fachmann dahingehend ausgewählt wird, dass die stoffschlüssige Verbindung den mechanischen Belastungen, insbesondere während der Torsion des Torsionsfederelements, standhält.

Zur Verbindung der Dämpfungselemente mit dem Innenrohr kann auch eine formschlüssige Verbindung vorgesehen sein. Diese kann in der Art erfolgen, als das das Innenrohr Erhebungen und/oder Vertiefungen aufweist, in welche Dämpfungselemente eingelegt werden können. Vorteilhaft daran ist, dass die Dämpfungselemente somit reversibel mit dem Innenrohr verbindbar sind und bei Bedarf ausgetauscht werden können.

Der **Radschwinghebel** ist ein Bauteil der Radaufhängungsvorrichtung, welches im Wesentlichen parallel zur Vehikellängsachse ausgerichtet ist. Die Verbindung oder die entkoppelbare Verbindung zum Innenrohr befindet sich am proximalen Radschwinghebelende, welches in Fahrtrichtung ausgerichtet ist. Der Radschwinghebel ist ein längliches Bauteil, welches den Zweck erfüllt, Rad und Radführungsmittel fest mit dem Torsionsfederelement zu verbinden. Die Abmessungen des Radschwinghebels sowie dessen Winkel seiner Längsachse in Bezug auf die Vehikellängsachse, ergeben sich entsprechend aus dem gewünschten Abstand zwischen Radführungsmittel und dem distalen Innenrohrende.

Weiterhin erfüllt der Radschwinghebel den Zweck, die Federbewegung des Rades parallel der Vehikelhochachse in eine Rotationsbewegung um die Längsachse des Torsionsfederelements umzuwandeln. Dadurch wird die Funktionsweise des Torsionsfederelementes ermöglicht, welches eine Torsion, also eine Verdrehung um die Längsachse, voraussetzt.

Die Länge des Radschwinghebels bestimmt dabei die Umwandlung der Kraft, die auf das Rad parallel der Vehikelhochachse wirkt, in das entsprechende Drehmoment, welches auf das Torsionsfederelement wirkt. Da die Kräfte in Richtung Vehikelhochachse weitgehend durch Gewicht und Art der Nutzung des Vehikels vorgegeben sind, hat die Länge des Radschwinghebels eine direkte Auswirkung auf das Feder- und Dämpfverhalten der gesamten Schräglenkerachse. Die genaue Länge des Radschwinghebels kann vom Fachmann entsprechend der gewünschten Fahrdynamiken und Umsetzung der Kräfte ausgelegt werden.

Der Querschnitt des Radschwinghebels ist nicht fest vorgegeben. Der Querschnitt des Radschwinghebels variiert in der Regel über die Länge des Radschwinghebels. Der Querschnitt des Radschwinghebels muss derart gewählt sein, dass eine ausreichende Festigkeit für die Übertragung aller Fahrwerkskräfte ohne bleibende Verformung gewährleistet ist. Vorzugsweise ist der Radschwinghebel außerdem so steif ausgelegt, dass durch die Fahrwerkskräfte nur minimale und temporäre Verformungen auftreten. Die Minimierung der Verformungen ist erstrebenswert, da das Rad möglichst ausschließlich die vorgesehenen Federbewegungen ausführen soll. Insbesondere ist der Radschwinghebel auf Biegung belastet durch die Kräfte, die parallel der Vehikelhochachse auf das jeweilige Rad wirken. Der Querschnitt des Radschwinghebels ist daher, insbesondere an dessen Ende in Fahrtrichtung, besonders biegesteif gegen diese Kräfte ausgeführt. Eine solche Ausführung wird insbesondere durch eine große Höhe des Querschnittes parallel der Vehikelhochachse erreicht, mit großer Breite des Materials parallel der Vehikelquerachse an den jeweils höchsten oder niedrigsten Stellen. Eine hierfür beispielhafte, insbesondere für diese Art der Biegesteifigkeit bevorzugte, Ausführung des Radschwinghebels wäre ein Doppel-T-Querschnitt, wobei die offenen Seiten des T-Querschnitts nach links und rechts parallel der Vehikelquerachse ausgerichtet sind.

Der Radschwinghebel ist an einem **distalen Radschwinghebelende** (6.2), welches entgegen der Hauptfahrtrichtung ausgerichtet ist, mit einem Radführungsmittel verbunden. Diese Verbindung ist in Form einer fest eingespannten Lagerung ausgestaltet, welche Kräfte und Momente in alle Richtungen aufnehmen kann. Dadurch wird jegliche Bewegung des Radführungsmittels ohne Freiheitsgrade in den Radschwinghebel übertragen. Dadurch wird gewährleistet, dass das Radführungsmittel nur die durch das Torsionsfederelement gewünschte Federbewegung ausführt.

Das **Radführungsmittel** dient der Lagerung des Rades. Das bedeutet, dass das Rad in seiner Rotationsrichtung, in der es auf der Fahrbahn abrollt, drehbar gelagert ist, während alle anderen Bewegungen gesperrt sind. Dies wird durch bevorzugt durch ein Paar Radlager erreicht, welche das Radführungsmittel umfasst, und mit denen das Rad gelagert ist. Die weitere, genaue Ausgestaltung des Radführungsmittels ist für diese Radaufhängungsvorrichtung nicht relevant.

In einer bevorzugten Ausgestaltung ist die Schräglenkerachse **dreiteilig** ausgestaltet. Dies bedeutet, dass sie zumindest ein **zentrales Tragrohr** (2.1) sowie zwei **äußere Tragrohre** umfasst. Dabei sind die äußeren Tragrohre so ausgestaltet, dass sie in dem zentralen Tragrohr **führbar angeordnet** sind. Das zentrale Tragrohr ist bevorzugt so ausgestaltet, dass dessen Längsachse parallel zur Vehikelquerachse ausgerichtet ist. Die äußeren Tragrohre können in ein **linkes äußeres Tragrohr** (2.2) sowie ein **rechtes äußeres Tragrohr** (2.3) unterschieden werden.

Das zentrale Tragrohr ist mit dem Rahmen fest verbunden, während die äußeren Tragrohre beweglich in dem zentralen Tragrohr oder in dem zentralen Tragrohr und zumindest einem **Rahmen-Tragrohr-Lagerungspunkt** (8.2) gelagert sind. Dabei ist auch der Rahmen-Tragrohr-Lagerungspunkt fest mit dem Rahmen verbunden. In einer Ausgestaltung umfasst der Rahmen-Tragrohr-Lagerungspunkt zumindest eine **Walzenanordnung** (8.3), die als Lagerungspunkt für das äußere Tragrohr dient. Die Walzenanordnung kann bspw. eine Hartgummiwalze umfassen. Vorteilhaft geht damit eine erhöhte Federung durch ein zusätzliches Federelement einher. Damit können die Komforteigenschaften der Federung sowie die Robustheit der Schräglenkerachse gegen ungefährliche Fehlnutzung, beispielsweise dem Anfahren eines Bordsteins, vorteilhaft erhöht werden. Vorteilhaft an der Verwendung einer solchen Walzenanordnung ist, dass das Tragrohr, insbesondere ein äußeres Tragrohr, wie oben beschrieben teleskopartig parallel zur Vehikelquerachse bewegt werden kann.

Im äußeren Tragrohr ist, wie weiter oben für ein Tragrohr beschrieben, das Innenrohr mit den Dämpfungselementen angeordnet, wobei die Gesamtheit aus zentralem Tragrohr, linkem oder rechten Tragrohr und Innenrohr als ein Torsionsfederelement zu verstehen ist.

Die **führbare Anordnung** des inneren Tragrohrs im äußeren Tragrohr hat zu Folge, dass das äußere Tragrohr bevorzugt im Wesentlichen **parallel der Vehikelquerachse verschiebbar** ausgestaltet ist. Dabei wird eine teleskopartige Verschiebung verstanden, die durch ein **Teleskopiermittel** (7.1) ermöglicht wird. Bei einem Teleskopiermittel kann es sich beispielsweise um einen **Aktuator** handeln, der durch eine Elektronik ansteuerbar ist. Der Aktuator kann einen Servomotor umfassen, der dazu eingerichtet ist, das äußere Tragrohr gegen das zentrale Tragrohr teleskopartig zu verschieben. Vorteilhaft kann damit erreicht werden, dass eine **Spurweite** (7.0) des Vehikels einstellbar ist.

Das Teleskopiermittel kann derart ausgestaltet sein, dass außerhalb des zentralen Tragrohrs der Aktuator mit einer **Welle** (7.2) angeordnet ist, wobei die Welle in das zentrale Tragrohr führt. Innerhalb des zentralen Targrohrs kann eine **Umsetzungsvorrichtung** (7.3) angeordnet sein, welches die Drehbewegung der Welle dahingehend umsetzt, dass die äußeren Tragrohre (linkes und rechtes Tragrohr) teleskopartig gegen das zentrale Tragrohr verschoben wird und somit die Spurweite des Vehikels einstellbar wird.

In einer bevorzugten Ausgestaltung kann die Spurweite des Vehikels während der Fahrt des Vehikels eingestellt werden. So kann vorteilhaft erreicht werden, dass das Verhältnis von Schwerpunkthöhe zur Spurweite des Vehikels verringert wird. Damit wird das Kurvenverhalten dahingehend beeinflusst, dass das Vehikel weniger um die Vehikellängsachse rotiert und weniger Last während der Kurvenfahrt dynamisch zum kurvenäußeren Rad verschoben wird. Die Steuerung einer Spurweiteneinstellung kann in dieser Ausgestaltung automatisiert von einer elektronischen Regelung gesteuert werden.

Dabei kann die elektronische Regelung dazu eingerichtet sein zu entscheiden, in welcher fahrdynamischen Situation welche Spurweiteneinstellung für das fahrdynamische Verhalten vorteilhaft ist.

In einer Ausgestaltung ist ein Tragrohr, insbesondere ein zentrales Tragrohr (sofern keine äußeren Tragrohre verwendet werden, soll Tragrohr und zentrales Tragrohr äquivalent verwendet werden) und der Rahmen als ein **Kontinuum** ausgebildet. Darunter ist zu verstehen, dass das Tragrohr und der Rahmen aus einem durchgängigen Material gebildet und bspw. über ein Guss- oder Fräsverfahren erzeugt worden sind. Damit kann vorteilhaft erreicht werden, dass weniger Bauteile miteinander verbunden werden müssen, um die erfindungsgemäße Radaufhängungsvorrichtung mit dem Rahmen des Vehikels zu verbinden.

In einer Ausführungform ist der Rahmen des Vehikels und/oder die auf dem Rahmen gelagerte Aufbaukonstruktion auf der Höhe der Verbindung von Tragrohr und Rahmen über die volle Spurweite ausgedehnt. Diese platzsparende Konstruktion wird durch die Radaufhängungsvorrichtung ermöglicht. Im Vergleich zu klassischerweise über dem Radführungsmittel parallel der Vehikelhochachse angeordneten Schraubenfedern, ist das Torsionsfederelement im Wesentlichen parallel zur Vehikelhorizontalebene angeordnet. Im Bereich direkt über der Radaufhängungsvorrichtung befindet sich somit nutzbarer Raum für beispielsweise eine Fahrgastzelle.

Die Nutzung einer Schräglenkerachse als eine Crashstruktur erfordert, dass Rahmen und Aufbaukonstruktion mit ihrem vordersten Punkt in Fahrrichtung bevorzugt deutlich hinter dem vordersten Punkt der Schräglenkerachse angeordnet sind. Eine dadurch mögliche, konstruktiv bedingte Platzreduktion für die Aufbaukonstruktion entlang der Vehikellängsachse wird durch die oben beschriebenen Eigenschaften des Torsionsfederelementes ausgeglichen.

Insbesondere betrifft dieser Platzausgleich die gesamte Spurweite des Vehikels, wenn das Rad durch die schräge Anordnung der Schräglenkerachse in Fahrtrichtung vorwärts angeordnet ist; weiterhin den Platz über dem Radführungsmittel, in dem durch das Torsionsfederelement Schraubenfedern eingespart werden; und weiterhin den Platz zwischen Radführungsmittel und Vehikellängsmittelebene, in dem keine Hindernisse bzw. nur das Torsionsfederelement befindlich ist, im Vergleich zu Querlenkern bei vergleichbaren Achskonstruktionen.

Die Erfindung betrifft ferner ein Vehikel aufweisend eine erfindungsgemäße Radaufhängungsvorrichtung und einen Rahmen, welcher als Lagerungsanordnung für eine Aufbaukonstruktion ausgebildet ist.

### AUSFÜHRUNGSBEISPIELE

Nachfolgend wird die vorliegende Erfindung anhand von Ausführungsbeispielen unter Bezugnahme auf die beiliegenden Zeichnungen näher beschrieben, ohne die Erfindung auf diese zu beschränken. Dabei zeigen:
- **Fig. 1A:**: eine schematische Darstellung einer erfindungsgemäßen Radaufhängungsvorrichtung (1.0) in Draufsicht;
- **Fig. 1B:**: eine schematische Darstellung eines Torsionsfederelements (1.2) in der Querschnittsebene A-A aus Fig. 1A im Querschnitt;
- **Fig. 2:**: eine Darstellung verschiedener Achsen und Ebenen;
- **Fig. 3A:**: eine schematische Darstellung einer Radaufhängungsvorrichtung (1.0) mit Rahmen (8.0) in Draufsicht;
- **Fig. 3B:**: eine schematische Darstellung eines Entkopplungsvorganges des proximalen Radschwunghebelendes (6.1) vom distalen Innenrohrende (3.2);
- **Fig. 4A:**: eine schematische Darstellung eines Innenrohrs (3.0) und damit verbundener Dämpfungselemente (5.0);
- **Fig. 4B:**: eine schematische Darstellung eines Torsionsfederelements (1.2) im Querschnitt;
- **Fig. 5:**: eine schematische Darstellung einer Radaufhängungsvorrichtung (1.0) mit Spurweiteneinstellung;
- **Fig. 6A:**: eine schematische Darstellung eines Rahmen-Tragrohr-Lagerungspunktes (8.2);
- **Fig. 6B:**: eine aus dem Stand der Technik bekannte Ausführungsform eines Dämpfungselementes bestehend aus Gummistrangelementen (5.1).

In den unterschiedlichen Figuren sind hinsichtlich ihrer Funktion gleichwertige Teile stets mit denselben Bezugszeichen versehen, sodass diese in der Regel auch nur einmal beschrieben werden.

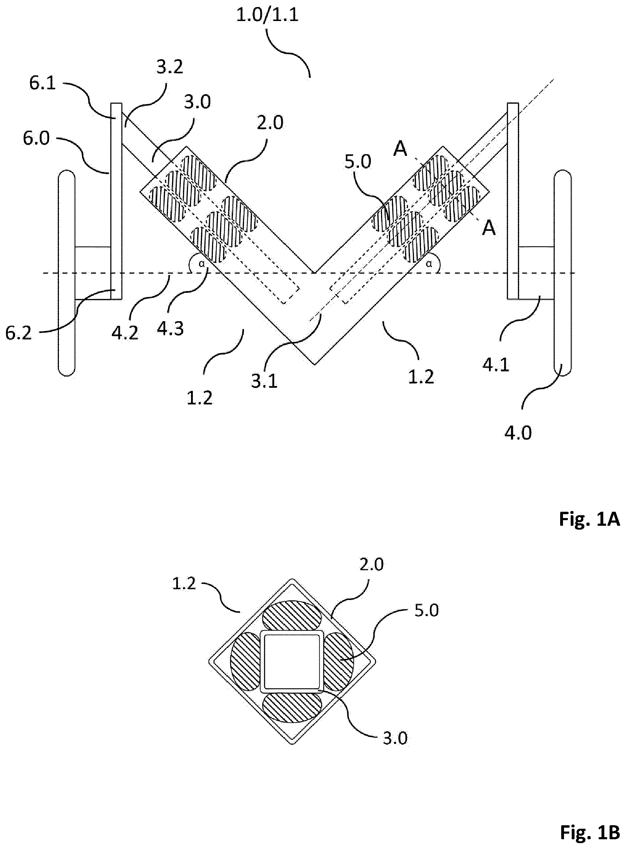

Die **Fig. 1A** zeigt eine Radaufhängungsvorrichtung (1.0), die eine Schräglenkerachse (1.1) umfasst, die zwei Torsionsfederelementen (1.2) aufweist. Dabei ist jeweils ein Innenrohr (3.0) in einem Tragrohr (2.0) gelagert. Zwischen dem Innenrohr (3.0) und dem Tragrohr (2.0) sind Dämpfungselemente (5.0) angeordnet. Das proximales Radschwinghebelende (6.1) ist mit dem distalen Innenrohrende (3.2) verbunden. Das distale Radschwinghebelende (6.2) ist mit dem Radführungsmittel (4.1) verbunden, an welchem ein Rad (4.0) anbringbar ist. Die Räder (4.0) drehen sich um eine Radachse (4.2). Der Winkel Alpha (a, 4.3) zwischen Radachse (4.2) und der Längsachse des Tragrohres bzw. der Innenrohrlängsachse (3.1) ist hier stark übertrieben dargestellt und beträgt in diesem Ausführungsbeispiel 8°.

Die **Fig. 1B** zeigt eine Querschnittsansicht durch die Schnittebene A-A aus der Fig. 1A. Hier ist das Innenrohr (3.0) durch umgebende Dämpfungselemente (5.0) innerhalb des Tragrohres (2.0) gelagert.

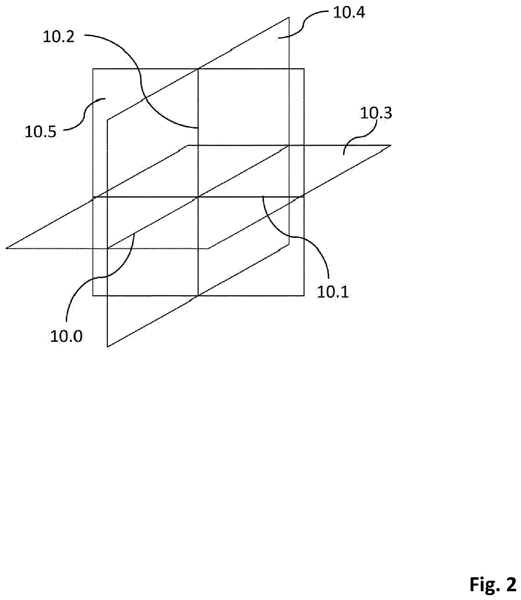

Die **Fig. 2** zeigt die Lage der Vehikellängsachse (10.0), der Vehikelquerachse (10.1), der Vehikelhochachse (10.2) und die durch diese aufgespannte Vehikelhorizontalebene (10.3), Vehikellängsmittelebene (10.4) und Vehikelquermittelebene (10.5).

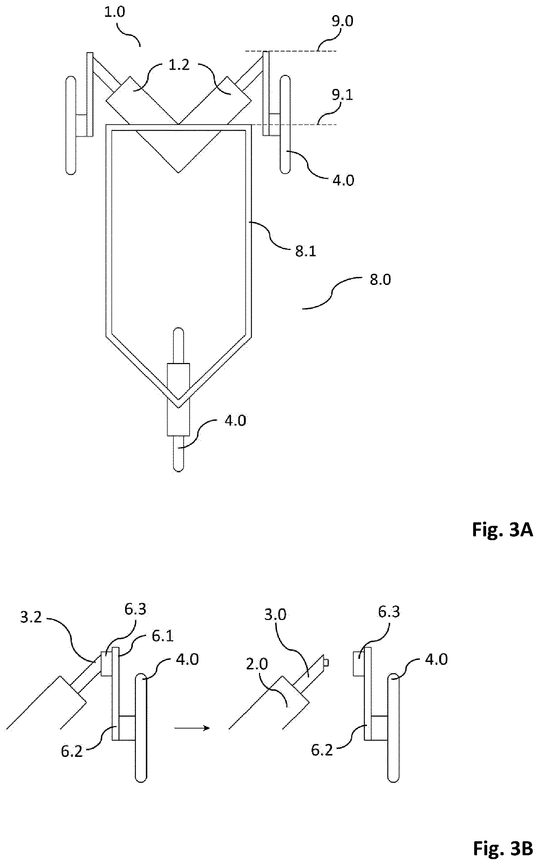

Die **Fig. 3A** zeigt eine schematische Ansicht der Radaufhängungsvorrichtung (1.0) eines dreirädrigen Vehikels (8.0), die unter einem Rahmen (8.1) des Vehikels angeordnet ist und als Crashstruktur dient.

Die **Fig. 3B** zeigt eine Ausführungsform, bei der das proximale Radschwinghebelende (6.1) entkoppelbar mit dem distalen Innenrohrende (3.2) verbunden ist (linke Darstellung) und von diesem entkoppelt werden kann (rechte Darstellung). Vorteilhaft kann das Innenrohr (3.0) somit einfach aus dem Tragrohr (2.0) entnommen werden.

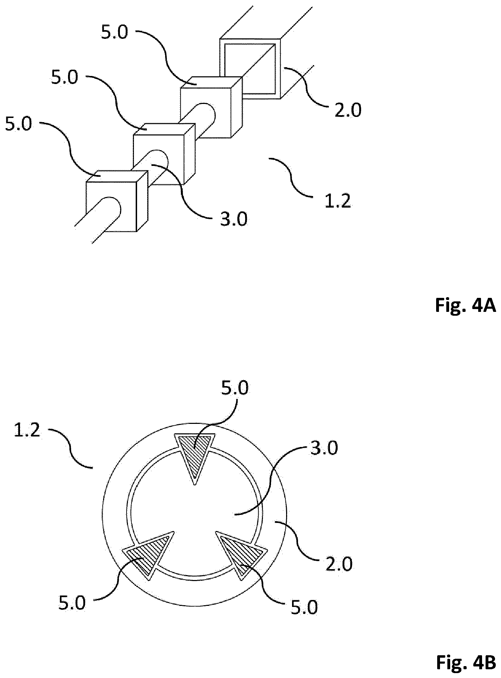

Die **Fig. 4A** zeigt ein Innenrohr (3.0) mit damit stoffschlüssig verbundenen Dämpfungselementen (5.0), wobei diese so ausgestaltet sind, dass diese passgenau in ein Tragrohr (2.0) einsetzbar sind um die Funktion als Torsionsfederelement (1.2) auszuüben.

Die **Fig. 4B** zeigt einen Querschnitt eines Torsionsfederelementes (1.2) mit Tragrohr (2.0), Innenrohr (3.0) und strangförmigen Dämpfungselementen (5.0) mit im Wesentlichen dreieckigen Querschnitt, die im 120° Winkel konzentrisch um die Längsachse des Innenrohres (3.0) angeordnet sind. Mit dieser Ausführungsform kann vorteilhaft erreicht werden, dass einzelne Dämpfungselemente (5.0) einfach entnommen und bspw. ausgetauscht werden können. Dies ist bspw. dann der Fall, wenn Dämpfungselemente (5.0) aufgrund unterschiedlicher Belastung unterschiedlich schnell verschleißen.

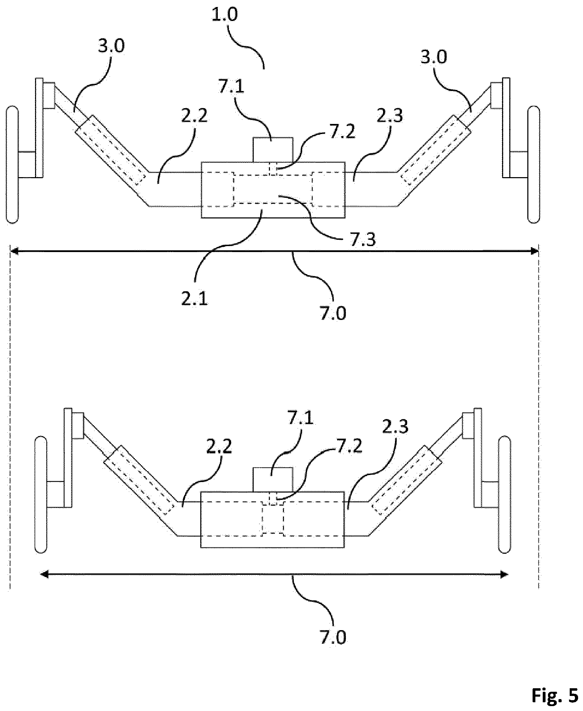

Die **Fig. 5** zeigt eine Radaufhängungsvorrichtung (1.0), bei der die Spurweite (7.0) einstellbar ist. Die Spurweite (7.0) kann über ein Telekopiermittel (7.1) eingestellt werden, welches über eine Welle (7.2) die Umsetzungsvorrichtung (7.3) dahingehend antreibt, dass die äußeren Tragrohre (2.2, 2.3) in das zentrale Tragrohr (2.1) teleskopartig zurückgezogen (Fig. 5B) oder aus diesem teleskopartig herausgeschoben (Fig. 5A) werden.

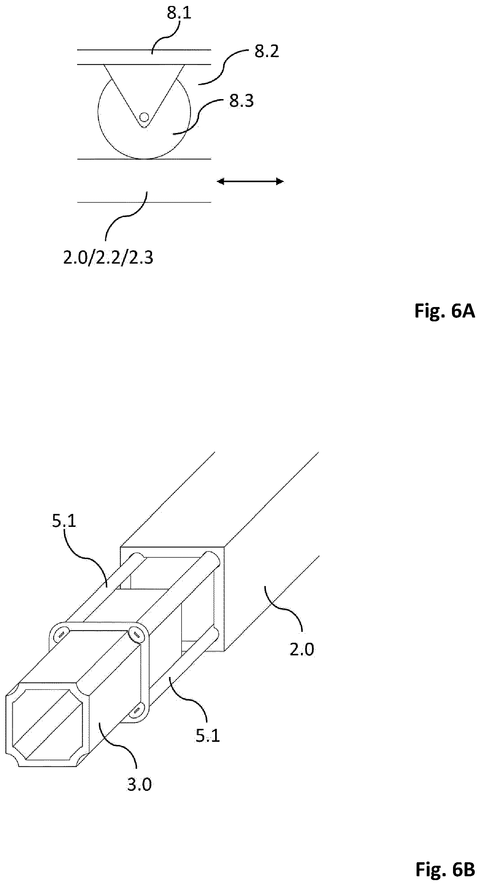

Die **Fig. 6A** zeigt einen Rahmen-Tragrohr-Lagerungspunkt (8.2), der eine Walzenanordnung (8.3) umfasst und dazu eingerichtet ist, vorteilhaft eine Federung eines Tragrohres (2.0) zu ermöglichen und gleichzeitig zu erlauben, dass ein äußeres Tragrohr (2.2, 2.3) teleskopartig verschoben (durch den Doppelpfeil angedeutet) werden kann und dennoch über die Walzenanordnung (8.3) federnd gelagert ist.

Die **Fig. 6B** zeigt eine aus dem Stand der Technik bekannte Ausführungsform eines Dämpfungselements (5.0), welches aus vier Gummistrangelementen (5.1) besteht, die so verbunden sind, dass sie gleichzeitig aus dem Tragrohr (2.0) entnommen werden müssen.

Die vorstehenden Ausführungen sind nur einige bevorzugte und realisierbare Ausführungsformen der vorliegenden Erfindung. Daher sind alle gleichwertigen strukturellen Änderungen, die durch Anwendung der Beschreibung der Erfindung vorgenommen werden, in den Umfang der Patentanmeldung einzubeziehen.

Obwohl die Erfindung unter Bezugnahme auf bestimmte Ausführungsbeispiele beschrieben und illustriert wurde, soll die Erfindung nicht auf diese Ausführungsbeispiele beschränkt werden. Der Fachmann erkennt, dass Variationen und Modifikationen vorgenommen werden können, ohne dass der wahre Umfang der Erfindung, wie er durch die Ansprüche und Beschreibung definiert ist, verlassen wird. Es ist daher beabsichtigt, im Rahmen der Erfindung alle Variationen und Modifikationen, die in den Anwendungsbereich der beigefügten Ansprüche und deren Äquivalente fallen, einzuschließen.

**BEZUGSZEICHENLISTE**

| | |
|---|---|
| 1.0 | Radaufhängungsvorrichtung |
| 1.1 | Schräglenkerachse |
| 1.2 | Torsionsfederelement |
| 2.0 | Tragrohr |
| 2.1 | zentrales Tragrohr |
| 2.2 | linkes äußeres Tragrohr |
| 2.3 | rechtes äußeres Tragrohr |
| 3.0 | Innenrohr |
| 3.1 | Innenrohrlängsachse |
| 3.2 | distales Innenrohrende |
| 4.0 | Rad |
| 4.1 | Radführungsmittel |
| 4.2 | Radachse |
| 4.3 | Winkel Alpha (α) |
| 5.0 | Dämpfungselement |
| 5.1 | Gummistrangelement |
| 6.0 | Radschwinghebel |
| 6.1 | proximales Radschwinghebelende |
| 6.2 | distales Radschwinghebelende |
| 6.3 | Entkoppelungsmittel |
| 7.0 | Spurweite |
| 7.1 | Teleskopiermittel |
| 7.2 | Welle |
| 7.3 | Umsetzungsvorrichtung |
| 8.0 | dreirädriges Vehikel |
| 8.1 | Rahmen |
| 8.2 | Rahmen-Tragrohr-Lagerungspunkt |
| 8.3 | Walzenanordnung |
| 9.0 | vorderster Punkt der Radaufhängungsvorrichtung |
| 9.1 | vorderster Punkt des Rahmens |
| 10.0 | Vehikellängsachse |
| 10.1 | Vehikelquerachse |
| 10.2 | Vehikelhochachse |
| 10.3 | Vehikelhorizontalebene |
| 10.4 | Vehikellängsmittelebene |
| 10.5 | Vehikelquermittelebene |

## Patentansprüche

1. **Radaufhängungsvorrichtung** (**1.0**) für zumindest dreirädrige Vehikel,
wobei die Vorrichtung (**1.0**) eine Schräglenkerachse (**1.1**) umfasst,
wobei die Schräglenkerachse (**1.1**) zumindest ein Torsionsfederelement (**1.2**) umfasst,
wobei das Torsionsfederelement (**1.2**) zumindest ein Tragrohr (**2.0**) und zumindest ein innerhalb des Tragrohrs (**2.0**) angeordnetes Innenrohr (**3.0**) umfasst,
wobei zwischen dem Tragrohr (**2.0**) und dem Innenrohr (**3.0**) zumindest ein Dämpfungselement (**5.0**) angeordnet ist,
wobei ein distales Radschwinghebelende (**6.2**) mit einem Radführungsmittel (**4.1**) verbunden ist,
wobei ein Rad (**4.0**) mit dem Radführungsmittel (**4.1**) verbindbar ist,
wobei zwischen einer Radachse (**4.2**) und dem Tragrohr (**2.0**) ein Winkel Alpha (**4.3**) eingestellt ist,
**dadurch gekennzeichnet, dass**
die Vorrichtung (**1.0**) als eine Crashstruktur ausgebildet ist, wobei zumindest ein vorderster Punkt der Radaufhängungsvorrichtung (9.0) in Fahrtrichtung vor einem vordersten Punkt eines Rahmens (9.1) angeordnet ist.

2. Radaufhängungsvorrichtung (**1.0**) nach Anspruch 1, wobei der Rahmen (8.1) als eine Konstruktion ausgebildet ist, welche tragende Teile des Vehikels aufweist.

3. Radaufhängungsvorrichtung (**1.0**) nach Anspruch 2, wobei die tragenden Teile dazu ausgebildet sind, den Antrieb, die Karosserie und die Nutzlast zu tragen und gegen äußere Krafteinwirkungen zu stabilisieren.

4. Vorrichtung gemäß einem der Ansprüche 1 bis 3, wobei der Winkel Alpha (4.3) zwischen 1° und 30°, bevorzugt zwischen 2° und 10°, besonders bevorzugt zwischen 5° und 9° beträgt.

5. Vorrichtung gemäß einem der Ansprüche 1 bis 4, wobei ein distales Innenrohrende (**3.2**) mit einem proximalen Radschwingehebelende (**6.1**) über ein Entkoppelungsmittel (**6.3**) entkoppelbar verbunden ist.

6. Vorrichtung gemäß einem der Ansprüche 1 bis 5, wobei das Dämpfungselement (**5.0**) mit dem Innenrohr (**3.0**) stoffschlüssig und/oder formschlüssig verbunden ist.

7. Vorrichtung gemäß einem der Ansprüche 1 bis 6, wobei das Innenrohr (3.0) aus dem Tragrohr (**2**.**0**) entnehmbar ist.

8. Vorrichtung gemäß einem der Ansprüche 1 bis 7, wobei eine Spurweite (**7.0**) einstellbar ist.

9. Vorrichtung gemäß Anspruch 8, wobei die Schräglenkerachse (**1.1**) zumindest dreiteilig ausgestaltet ist, wobei die Schräglenkerachse (**1.1**) zumindest ein zentrales Tragrohr (**2.1**) umfasst und wobei die Schräglenkerachse (1**.1**) zwei äußere Tragrohre (**2.2**, **2.3**) umfasst, wobei ein äußeres Tragrohr (**2.2**, **2.3**) im zentralen Tragrohr (**2.1**) führbar angeordnet ist.

10. Vorrichtung gemäß Anspruch 9, wobei die zwei äußeren Tragrohre (**2.2**, **2.3**) bezogen auf das zentrale Tragrohr (**2.1**) entlang der Vehikelquerachse (**10.1**) verschiebbar ausgestaltet sind.

11. Vorrichtung gemäß Anspruch 9 oder 10, wobei die Verschiebung durch ein Teleskopiermittel (**7.1**) ermöglicht ist.

12. Vorrichtung gemäß einem der Ansprüche 1 bis 11, wobei das Tragrohr (**2.0**, **2.1**) und ein Rahmen (**8.1**) als ein Kontinuum ausgebildet sind.

13. Verwendung einer Radaufhängungsvorrichtung nach einem der Ansprüche 1 bis 12 als Crashstruktur in einem Fahrzeug.

14. Vehikel aufweisend eine Radaufhängungsvorrichtung nach einem der Ansprüche 1 bis 12 und einen Rahmen (8.1), welcher als Lagerungsanordnung für eine Aufbaukonstruktion ausgebildet ist, wobei zumindest ein vorderster Punkt der Radaufhängungsvorrichtung (9.0) in Fahrtrichtung vor einem vordersten Punkt des Rahmens (9.1) angeordnet ist.

15. Vehikel gemäß Anspruch 14, wobei der Rahmen (8.1) oder eine auf dem Rahmen (8.1) gelagerte Aufbaukonstruktion, wie insbesondere eine Fahrgastzelle, über die volle Spurweite des Vehikels auf Höhe der Verbindung des Tragrohrs mit dem Rahmen ausgedehnt ist.
